# EUROPEAN PATENT APPLICATION

(11) **EP 2 140 754 A1**
(43) Date of publication of application: **06.01.2010**
(21) Application number: 09164424.5
(22) Date of filing: 02.07.2009
(51) Int. Cl.: A01G 9/14, E04G 21/14

(54) **Assembly and method for glazing a building structure**

(30) Priority: 02.07.2008 NL 2001747
(71) Applicant: Havecon Kassenbouw B.V., 2665 JE Bleiswijk (NL)
(72) Inventor: Voorwinden, Abraham, 2651 LG, Berkel en Rodenrijs (NL); Verbakel, Hendrikus Joseph Petrus, 2665 TT, Bleiswijk (NL)
(74) Representative: Ketelaars, Maarten F.J.M.

(57) **Abstract**

Assembly and method for the glazing of a building structure. More specifically, the invention relates to the glazing of a structure with a limited load bearing capacity. A positioning device (2) is mounted to the building structure (20), the weight of which is limited in order that it cannot carry a large number of panels, such as glass panels (16). In order to ensure the efficient use of the positioning device, it is proposed that a mobile supply device (3) be used that can move back and forth between the positioning device which moves along the building structure where the panels are to be placed and a lifting device (4) which can be used to lift the panels to the roof-level of the lifting device. This lifts panels from the lifting device and transfers them to the positioning device. The supply device can be constructed to be relatively light in order for it to carry a large number of panels. If so desired, the positioning device can have a limited capacity for panels so that it can continue to operate as the supply device is moved away from the positioning device.

## Description

The present invention relates to an assembly for the glazing of a building structure, such as a horticultural greenhouse, comprising a mobile positioning device for engaging and installing glass panels on/in the building structure and a lifting device for lifting a number of glass panels from an initial lower level to a second higher level.

Such an assembly is known from NL-C-1013226. The objective therein is to mechanise the placement of glass panels. At present, it is customary for a cassette with a number of glass panels to be lifted up to the positioning or placement level by means of an elevator that is positioned on the deck of the greenhouse. On that level, the glass panels are taken from the cassette by persons present on the structure and laid in the correct position.

It is proposed to robotize this positioning operation by means of mechanisation. With this, the weight of the positioning device poses a problem in certain building structures. This applies in particular to horticultural greenhouses where such panels are becoming increasingly heavier due to their ever-increasing size. In such cases therefore, it is not possible for the positioning device to bear the high weight load of one or more glass cassettes without preventing excessive stress on the guttering structure upon which the positioning device generally rests. The supported moving operation of both the lifting device and the positioning device on the deck of the building structure is inefficient due to the fact that other activities are generally being performed somewhere between said deck of the horticultural greenhouse and the roof structure. Above all, it is not possible to reach the roof structure from every space on the deck of the greenhouse structure.

A solution would therefore be to provide the heaviest panels at the end of a roof structure of the horticultural greenhouse or other building structure and to move the positioning device to that end of the structure to pick up a number of glass panels. However, this then presents the aforementioned drawback with regard to the weight of the glass panels, where there is then the risk of overstressing the gutter structure in which the positioning device moves.

A device for glazing is known from NL 1013226 C, wherein a single bogie rolls along the greenhouse deck. This single bogie is provided with both storage for glass panes and a lifting arm for lifting these panes from the storage to their position in the frame.

It is the objective of the present invention to avoid the drawbacks described above and to provide an assembly that positions the glass panels in an as efficient manner as possible and as far as possible automated.

This object is achieved in a structure as described above in that said assembly comprises a supply device operative between said positioning device and said lifting device at said second higher level, said supply device being constructed to be independently mobile in relation to said positioning device and lifting device and comprises a storage capacity for glass panels.

According to the present invention, a supply device or shuttle is operative between the lifting device and the positioning device. This can be constructed relatively easily and has a limited weight. Indeed, the only function thereof is the carrying of (a cassette with) glass panels. If so desired, drive means can be present for the automatic movement back and forth of such a supply device but it is not necessary to have the construction already mounted in the positioning device, such as one or more positioning arms, counterweights for stabilizing the positioning device when panels are positioned, and the like. Because of the relatively low weight of the supply device or shuttle, this device can transport a relatively large amount of glass panels. These are transferred from the lifting device to the supply device by some form of mechanism. Such a transfer system can be present both in the lifting device and the supply device. Subsequently, a cassette with glass panels is preferably moved onto the positioning device by means of the supply device and the glass panels can be taken one by one from of the glass cassette using the positioning device, laid onto the supply device and then placed directly.

It is also possible to take limited number of glass panels from the supply device using the positioning device and to position these at a later stage. In the last instance, it is possible for the positioning device to remain operative whilst the supply device is not located near to the positioning device, i.e. in a situation wherein new glass panels are collected from the elevator or lifting device. It is also possible to apply multiple lifting devices and supply devices that can supply a single positioning device, for example from two opposing sides.

Obviously, it is also possible to install the lifting device in any desired position. This can be both inside and outside of the greenhouse. Furthermore, it is possible for the positioning device to be constructed in any conceivable manner. This can be more or less fully mechanized. In the most advanced alternative embodiment, the fully automated positioning of glass panels can be performed with the use of one or more arms. In other instances, it is possible to control this process by means of an operator. The supply device, whether automated or not, can also move back and forth between the lifting device and the positioning device.

The present invention also relates to a method for glazing a building structure such as a horticultural greenhouse, comprising the provision of a first number of glass panels, lifting said first number of panels from a low position to a higher position, the engagement of said glass panels in the higher position and the positioning thereof in the desired position with the use of a positioning device in or on the building structure, wherein a second number of glass panels are moved from the higher position to the positioning device, independent of the positioning device and where the number of glass panels is continuously received and transferred by the positioning device, wherein said third number of panels is less than said second number of panels. In addition, the lifting device contains a large number of glass panels, whereas the positioning device comprises a significantly smaller number of glass panels due to the weight restriction imposed thereon.

The invention will now be described in more detail with reference to the exemplary embodiment shown in the drawing, in which:
Fig. 1 shows, schematically, the assembly according to the invention;
Fig. 2 shows, highly schematically, the positioning operation of the positioning device;
Fig. 3 shows, highly schematically, the engagement of a glass panel by the positioning device;
Fig. 4a-c show the removal and transfer of glass panels from the lifting device to the supply device; and
Fig. 5 shows the return movement of the supply device towards the lifting device.

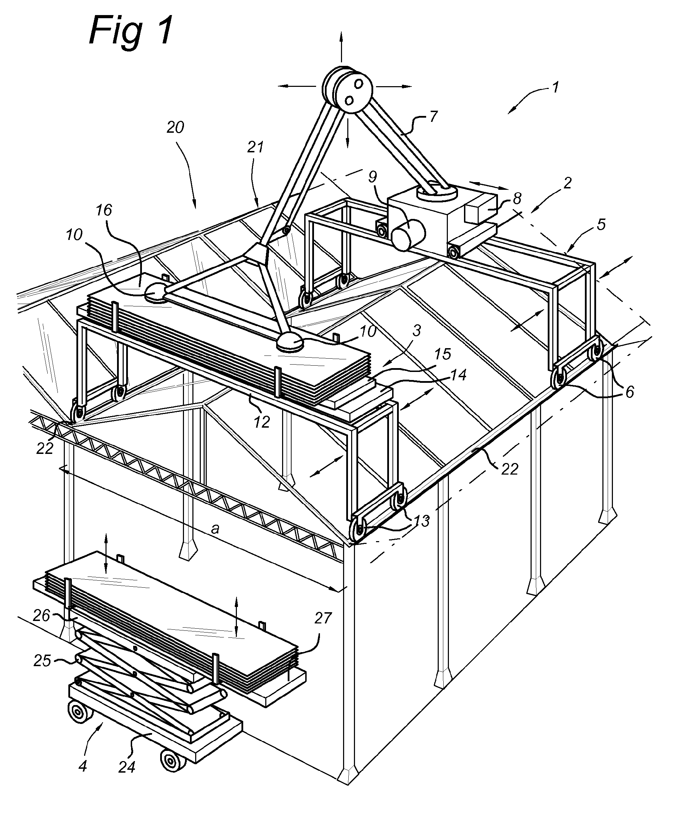

In Figure 1, the assembly according to the present invention is indicated in its entirety by the numeral 1. This is used for mounting panels, such as glass panels 16, onto a building structure 20 such as a horticultural greenhouse. In particular, the roof of the greenhouse which is shown with 21 is to be provided with such glass panels.
The roof is composed of a metallic frame with gutters 22. Details of the structural layout with beams and columns are absent and may comprise any known structure in the prior art.

The assembly according to the present invention comprises a glass positioning device 2, a supply device or shuttle 3 and a lifting device or elevator 4. The glass positioning device 2 can comprise any conceivable construction. This consists of a frame 5 with wheels 6 and is movable along two gutters 22 lying at a distance (distance at least 5 meters and indicated by a). The glass positioning device 2 is provided with one or more arms 7, at the end of which suction cups 10 are provided. Control unit 8 is present, as is a motor 9 for operating said arm. Moreover, a vacuum source is present to render the suctions cups 10 effective for the engagement of glass panels. The positioning device 2 can be more or less automated i.e. in the most extreme instance, glass panels can be placed in the framework structure of the greenhouse 20 fully automatically.

As indicated above, a supply device 3 is present, with a frame 12 provided with wheels 13 (and possibly, but not shown, a drive for said wheels 13). The upper side thereof is provided with a simple carrier 14 for carrying a cassette 15 thereupon, wherein a large number of glass panels 16 can be placed.

A lifting device 4 is present, consisting of a bogie 24 which can move along the deck, for which purpose wheels or caterpillar tracks are provided. A scissor lift 25 is present on the bogie for moving a carrier 26 upwards for carrying a cassette 27, also filled with glass panels.

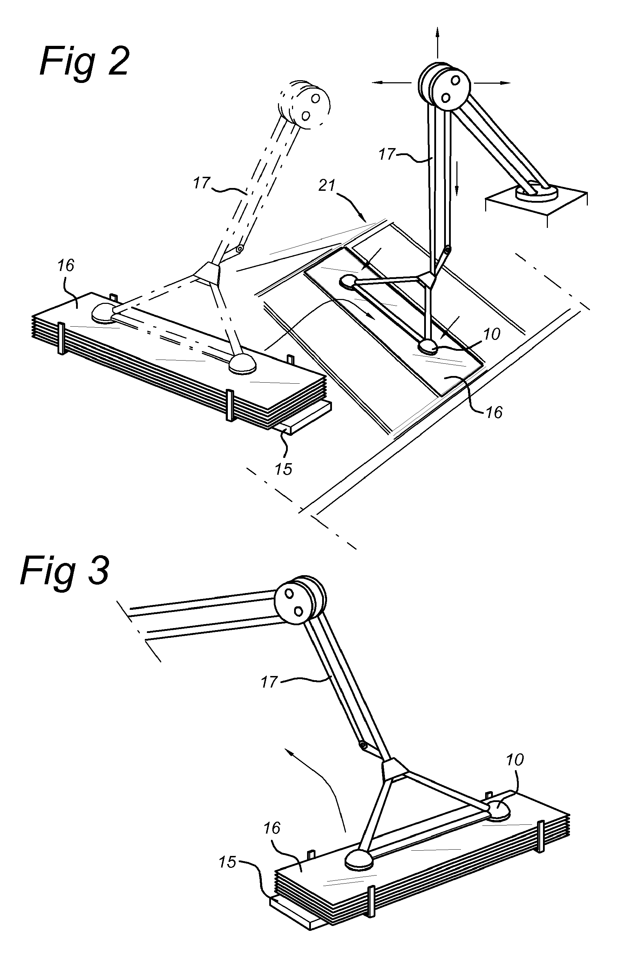

Figure 2 shows, schematically, the placement of a glass panel 16 into the precise desired position of the roof structure 21 by means of arm 17 with suction cup 10. This panel has been previously taken from cassette 15, as is schematically shown in Figure 3.

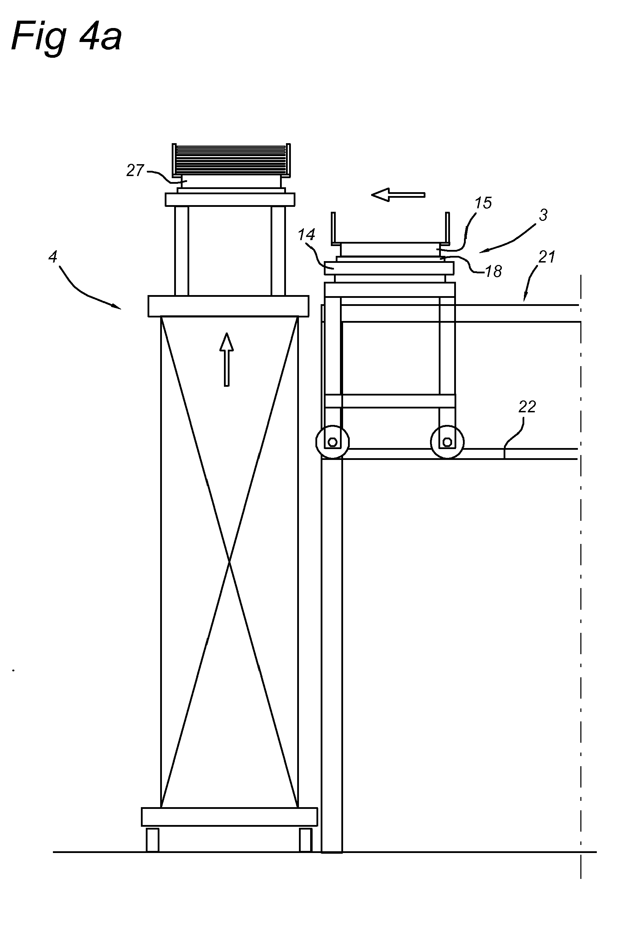

Fig. 4a-c shows the situation in which the supply device is no longer positioned next to the glass positioning device 2. This is the situation that arises when cassette 15 is empty. In addition, it is possible that a number of glass panels are still located on or near to the positioning device. After cassette 15 is emptied, the supply device 3 moves in the direction of the lifting device 4 which, in the example shown here, is present beyond the face end of the roof structure 21. However, it is also quite possible for the lifting device to be located in any other position.

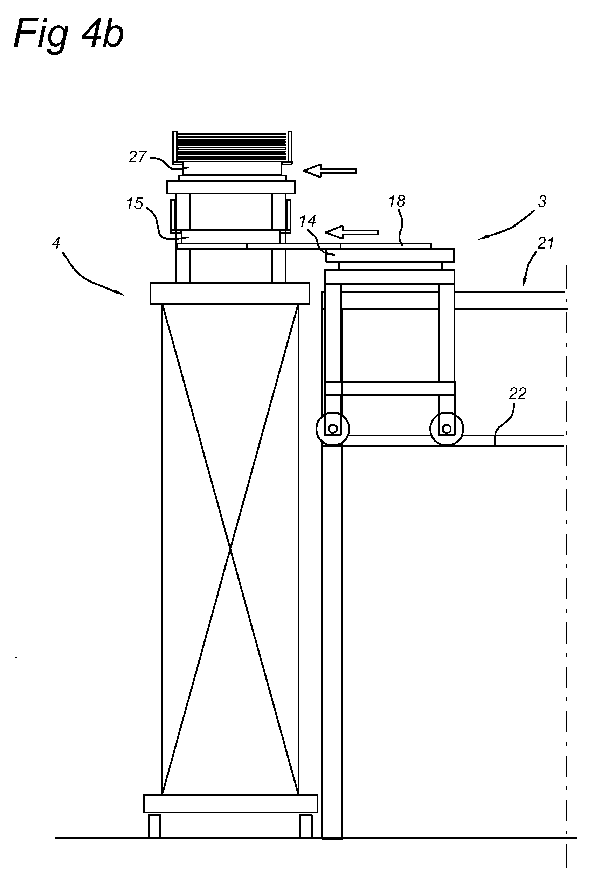

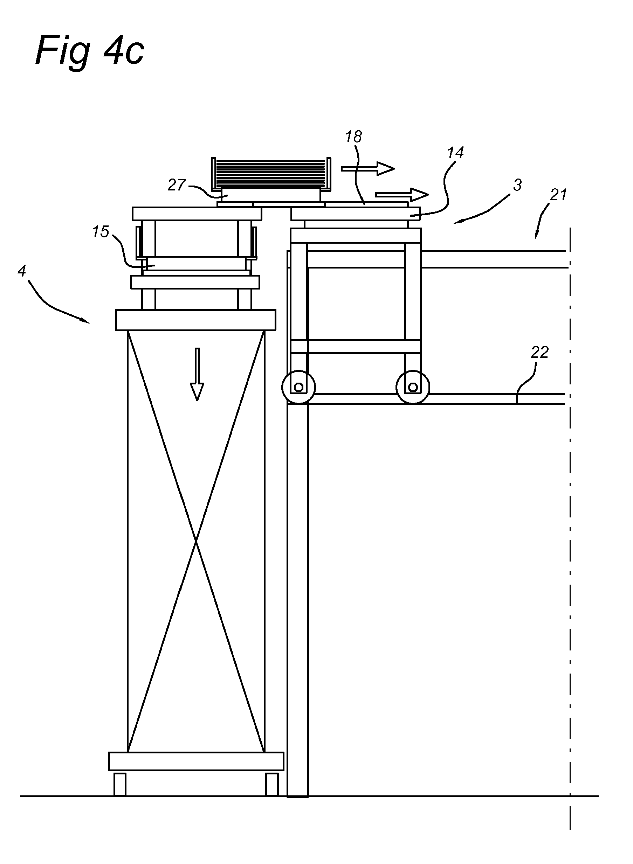

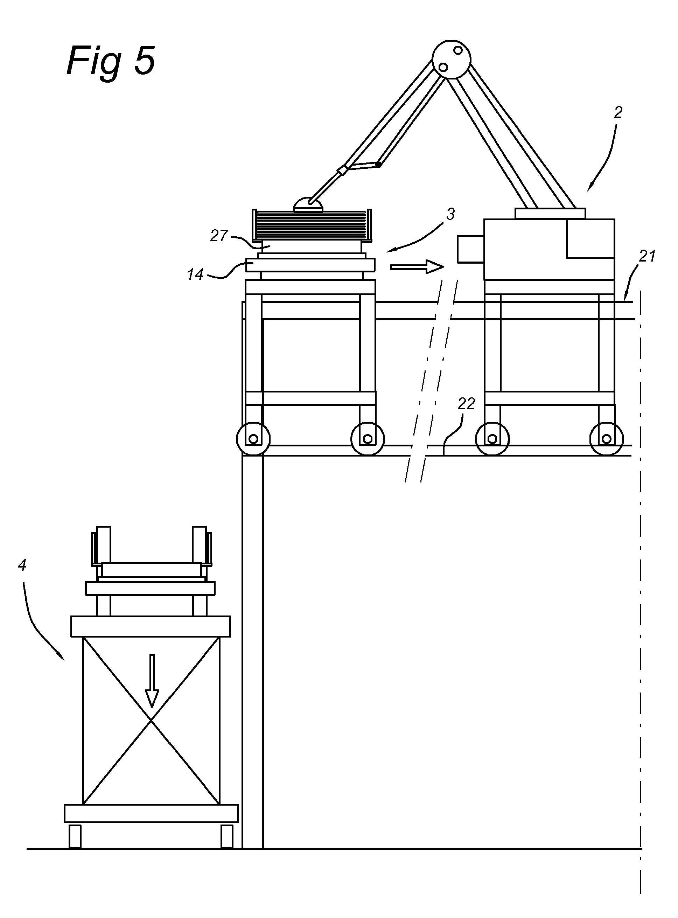

If the supply device 3 is located in close proximity to the lifting device 4, the exchange of cassettes 15 and 27 can take place with the use of any transfer mechanism indicated schematically in Figure 4 by the numeral 18. In other words, a full cassette 27 is moved onto carrier 14 of supply device 3 and the empty cassette 15 is removed by means of lifting device 4. If so desired, a large number of cassettes 27 can be present on the lifting device 4 and only one (or more) cassette(s) be transferred each time to the supply device. Among other things, this is dependent on the load bearing capacity of the gutter 22 and the weight of the supply device or shuttle 3. Subsequently, the supply device 3 moves back to the positioning device, as shown in Figure 5, and the process of placing glass panels can be continued.

It will be understood from the above, that if the supply device 3 is deployed, a larger number of panels can be present on the building structure, such as a horticultural greenhouse, and thus significantly increase the efficiency of the positioning device. The movement back and forth of the positioning device is then no longer required and this can be positioned each time in the desired position in an accurate manner for the respective the glass panel.

After reading the above, persons skilled in the art will be readily aware of alternative embodiments of the invention which are evident and lie within the scope of the appended claims.

## Claims

1. Assembly (1) for the glazing of a building structure, such as a horticultural greenhouse (20), comprising a mobile positioning device (2) for engaging and installing glass panels (16) on/in the building structure and a lifting device (4) for lifting a number (15, 27) of glass panels from an initial lower level to a second higher level, **characterized in that,** that said assembly (1) comprises a supply device (3) operative between said positioning device (2) and said lifting device (4) at said second higher level, said supply device (3) being constructed to be independently mobile in relation to said positioning device (2) and lifting device (4) and comprises a storage capacity for glass panels.

2. Assembly according to claim 1, wherein the lifting device and/or supply device is provided with delivery/pick-up means (18) for transferring glass panels from the lifting device to the supply device.

3. Assembly according to any of the preceding claims, wherein the lifting capacity of the lifting device for glass panels is at least twice as much as the lifting capacity for glass panels from the positioning device.

4. Assembly according to any of the preceding claims, wherein the supply device (3) is provided with wheels (13).

5. Assembly according to claim 4, wherein said wheels are designed to engage a gutter (22).

6. Assembly according to any of the claims 4 or 5, wherein the distance (a) perpendicular to the direction of movement between two opposing wheels is at least 5 metres.

7. Method for glazing a building structure such as a horticultural greenhouse (20), comprising the provision of a first number of glass panels, lifting said first number of panels from a low position to a higher position, the engagement of said glass panels in the higher position and the positioning thereof in the desired position with the use of a positioning device in or on the building structure, **characterized in that** a second number of glass panels are moved from the higher position to the positioning device, independent of the positioning device and where the number of glass panels is continuously received and transferred by the positioning device, wherein said third number of panels is less than said second number of panels.

8. Method according to claim 7 wherein said second number is smaller than said first number.

9. Method according to any of the claims 7 or 8, wherein said second number comprises a cassette with glass panels.

10. Method according to any of the claims 7 or 9, wherein said movement is performed in a direction of the building structure (20) and that said lifting operation is realised in said direction as viewed close to an end of said building structure.

11. Method according to claim 10, wherein the lifting operation is performed close to both ends of the building structure as viewed in said direction of movement.
